# EUROPÄISCHE PATENTANMELDUNG

(11) **EP 0 919 413 A2**
(43) Veröffentlichungstag der Anmeldung: **02.06.1999**
(21) Anmeldenummer: 98120979.4
(22) Anmeldetag: 05.11.1998
(51) Int. Cl.: B60J 7/057, B60J 1/17, E05F 15/16, E05F 15/20

(54) **Fahrzeug, insbesondere Personenkraftwagen**

(30) Priorität: 27.11.1997 DE 19752533
(71) Anmelder: DaimlerChrysler AG, 70567 Stuttgart (DE)
(72) Erfinder: Ebel, Peter, 74542 Steinkirchen (DE)

(57) **Zusammenfassung**

Die Erfindung betrifft ein Fahrzeug, insbesondere einen Personenkraftwagen, mit elektromotorisch angetriebenen Scheiben zum Öffnen und Schließen von Seitenfenstern und mit einem Schiebedach zum Freigeben und Verschließen einer Dachluke. Zur Vermeidung des Auftretens von sog. Wummergeräuschen bei geöffneter Dachluke ist eine Steuerung vorgesehen, die mit Überschreiten einer vorgegebenen Größe der vom Schiebedach freigegebenen Lukenöffnung ein Öffnen mindestens eines Seitenfensters zumindest um einen Minimalbetrag auslöst.

## Beschreibung

Die Erfindung betrifft ein Fahrzeug, insbesondere einen Personenkraftwagen, der im Oberbegriff des Patentanspruchs 1 angegebenen Gattung.

Bei solchen Fahrzeugen wird bei ganz oder teilweise geöffneter Dachluke und entsprechender Fahrzeuggeschwindigkeit das Luftvolumen im Fahrzeuginnenraum zu einem tieffrequenten Schwingen angeregt, das von den Fahrzeuginsassen deutlich und als störend wahrgenommen wird und in der Fachsprache als sog. Wummern bezeichnet wird. Der Einsetzpunkt dieses Wummerns ist von der Größe des Innenraums, der Öffnungsgröße der Dachluke und der Fahrzeuggeschwindigkeit abhängig und liegt bei relativ weit geöffneter Dachluke schon bei mäßigen Fahrzeuggeschwindigkeiten.

Bei einem bekannten Fahrzeug dieser Art (DE 15 55 217 A1) wird dieses Wummern durch eine von der Fahrzeuggeschwindigkeit abhängige, automatische Betätigung des Schiebedachs im Sinne zunehmenden Schließens der offenen Dachluke bei zunehmender Fahrzeuggeschwindigkeit und umgekehrt vermieden.

Bei einem Fahrzeug der eingangs genannten Art (DE 196 33 188.9-22) ist bereits vorgeschlagen worden, in Nähe der Dachluke einen Geräuschsensor anzuordnen, der die Wummergeräusche erfaßt und auf einen Störgrößengenerator einwirkt, der seinerseits Stellgrößen für den elektromotorischen Antrieb des Schiebedachs erzeugt. Aufgrund dieser Stellgröße verschiebt der Antrieb das Schiebedach in Richtung Schließen der Dachluke soweit, bis bei der verkleinerten Dachlukenöffnung das Wummern abgestellt ist.

Der Erfindung liegt die Aufgabe zugrunde, bei einem Fahrzeug der eingangs genannten Art das Auftreten von Wummergeräuschen bei geöffneter Dachluke ohne großen Meßaufwand in einfacher Weise zu vermeiden.

Die Aufgabe ist bei einem Fahrzeug der im Oberbegriff des Patentanspruchs 1 angegebenen Gattung erfindungsgemäß durch die Merkmale im Kennzeichen des Patentanspruchs 1 gelöst.

Das erfindungsgemäße Fahrzeug hat den Vorteil, daß zum Abbau der Wummergeräusche bei unveränderter Größe der vom Schiebedach freigebenen Lukenöffnung eines oder mehrerer der Seitenfenster des Fahrzeugs um z.B. einen schmalen Spalt von wenigen Millimetern geöffnet wird. Dadurch wird der von dem Luftvolumen des Fahrzeuginnenraums gebildete sog. Helmholzresonator bereits soweit verstimmt, daß in allen möglichen Geschwindigkeitsbereichen das Wummern nicht mehr auftritt. Ein Eingriff in die Schiebedachsteuerung oder eine Veränderung der Lukenöffnung durch das Betätigen des Schiebedaches ist nicht erforderlich. Das Öffnen der Seitenfenster bei Erreichen einer bestimmten Größe der Lukenöffnung, bei der das Wummern einsetzt, ist steuerungstechnisch sehr einfach zu realisieren und bedarf keiner aufwendigen Meßtechnik. In bevorzugter Ausgestaltung der Erfindung kann dies mittels eines Positionsschalters erreicht werden, der von dem Schiebedach nach Zurücklegen eines entsprechenden Schiebewegs in Richtung Öffnen der Dachluke betätigt wird und seinerseits ein Signal an die Steuerung ausgibt. Die auf die Betätigung der Seitenscheiben einwirkenden Steuermittel sind bei elektromotorisch betätigten Seitenfenstern ohnehin vorhanden und werden von der Steuerung entsprechend zum Öffnen der Seitenscheiben benutzt.

Vorteilhafte Ausführungsformen des erfindungsgemäßen Fahrzeugs mit zweckmäßigen Ausgestaltungen der Erfindung ergeben sich aus den weiteren Ansprüchen.

Gemäß einer bevorzugten Ausführungsform der Erfindung ist die Steuerung so ausgebildet, daß sie beim Verkleinern der vom Schiebedach freigegebenen Lukenöffnung unter die vorgegebene Größe ein Schließen des mindestens einen Seitenfensters auslöst. Dadurch ist sichergestellt, daß beim Schließen des Schiebedachs auch die geöffneten Seitenscheiben zuverlässig geschlossen werden.

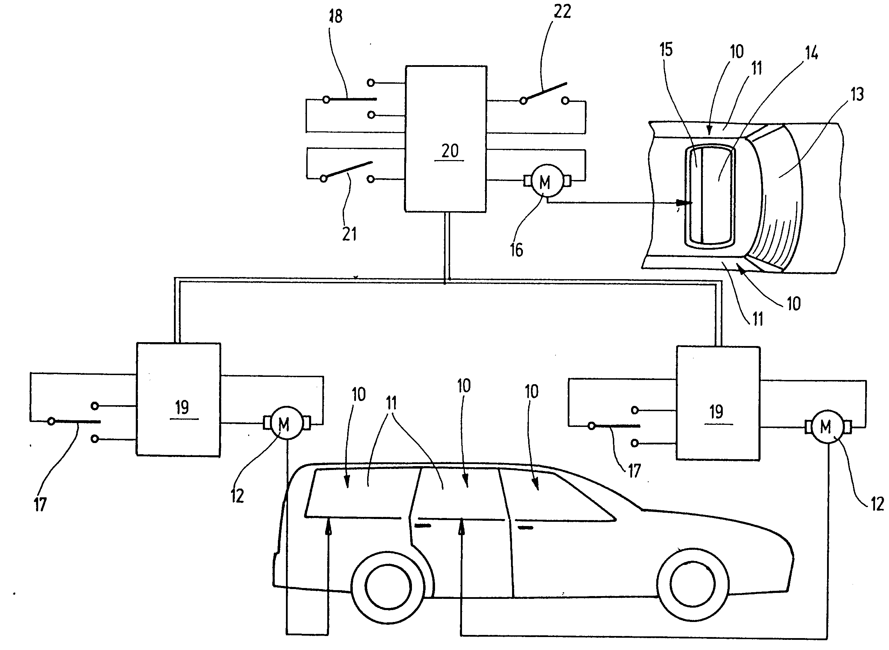

Die Erfindung ist anhand eines in der Zeichnung dargestellten Ausführungsbeispiels im folgenden näher beschrieben. Dabei zeigt die Zeichnung ein Blockschaltbild einer Steuerung von elektromotorischen Antrieben für Seitenscheiben und Schiebedach des Personenkraftwagens.

In der Zeichnung ist der als sog. Kombiwagen ausgebildete Personenkraftwagen als Beispiel für ein Fahrzeug in Seitenansicht und ausschnittsweise in Draufsicht dargestellt. Der Kombiwagen besitzt sechs Seitenfenster 10, deren Scheiben 11 zum Öffnen und Schließen der Seitenfenster 10 von elektromotorischen Fensterhebern betätigt werden. In der Zeichnung sind beispielhaft die Elektromotoren 12 für zwei Seitenfenster 10 schematisch dargestellt. Die Frontscheibe des Kombiwagens ist mit 13 bezeichnet. Wie in der ausschnittweise dargestellten Draufsicht des Kombiwagens verdeutlicht ist, ist in das Karosseriedach eine Dachluke 14 eingearbeitet, die mittels eines Schiebedachs 15 geöffnet und verschlossen werden kann. Die Verschiebung des Schiebedachs 15 erfolgt ebenfalls elektromotorisch, wobei der hierzu erforderliche Elektromotor 16 wiederum schematisch dargestellt ist. Die Betätigung der Seitenscheiben 11 und des Schiebedachs 15 wird jeweils durch einen Wählschalter ausgelöst, der im allgemeinen als Wipptaste ausgebildet ist und je nach Betätigungswunsch (Schließen oder Öffnen) in die eine oder andere Richtung gekippt werden muß. In der Zeichnung sind die Wählschalter für die Seitenscheibenbetätigung mit 17 und ist der Wählschalter für die Schiebedachbetätigung mit 18 bezeichnet. Die Wählschalter 17 liegen jeweils am Eingang einer Steuereinheit 19, die ausgangsseitig mit dem Elektromotor 12 verbunden ist und je nach Art des vom Wählschalter 17 kommenden Eingangssignals den Elektromotor 12 in die eine oder andere Drehrichtung einschaltet, je nachdem ob das Seitenfenster 10 geöffnet oder geschlossen werden soll.

Der Wählschalter 18 für die Schiebedachbetätigung liegt am Eingang einer Steuervorrichtung 20, die ausgangsseitig mit dem Elektromotor 16 verbunden ist und je nach Art des vom Wählschalter 18 kommenden Eingangssignals den Elektromotor 16 in die eine oder andere Drehrichtung einschaltet, je nachdem ob die Dachluke 14 geschlossen oder geöffnet werden soll. Die Steuervorrichtung 20 ist eingangsseitig noch mit dem Zündschloß 21 und mit einem im Verschiebeweg des Schiebedachs 15 angeordneten Positionsschalter 22 verbunden. Der Positionsschalter 22 ist dabei so ausgebildet, daß er bei geschlossener Dachluke 14 geöffnet ist und nach vollständiger oder weitgehend vollständiger Öffnung der Dachluke 14 schließt oder umgekehrt.

Die Steuervorrichtung 20 ist ausgangsseitig mit einem weiteren Steuereingang mindestens einer der Steuereinheiten 19 für die Seitenscheibenbetätigung verbunden und gibt über diese Verbindung ein Steuersignal an die Steuereinheit 19 oder Steuereinheiten 19, sobald bei Erreichen der vollen oder nahezu vollen Öffnung der Dachluke 14 durch das Schiebedach 15 der Positionsschalter 22 geschlossen (bzw. umgekehrt geöffnet) wird. Jede mit der Steuervorrichtung 20 verbundene Steuereinheit 19 schaltet daraufhin den zugeordneten Elektromotor 12 kurzzeitig ein, so daß die Scheibe 11 des Seitenfensters 10 um einen vorgegebenen Betrag in Richtung Öffnen des Seitenfensters 10 verschoben wird. Durch das Öffnen des mindestens einen Seitenfensters 10 wird bewirkt, daß bei geöffneter Dachluke 14 und mäßigen bis hohen Fahrzeugschwindigkeiten im Fahrzeuginnenraum kein die Fahrzeuginsassen störendes sog. Wummern auftritt. Wird die Dachluke 14 infolge Betätigen des Wählschalters 18 wieder durch das Schiebedach 15 geschlossen, so wird durch die Schiebedachverschiebung der Positionsschalter 22 wieder geschlossen (bzw. umgekehrt wieder geöffnet), und infolge dessen an die Steuervorrichtung 20 gelangenden Positionssignal erzeugt die Steuervorrichtung 20 ein Steuersignal, das die Steuereinheit 19 veranlaßt, den Elektromotor 12 in einer solchen Drehrichtung einzuschalten, daß das zuvor spaltbreit geöffnete Seitenfenster 10 wieder geschlossen wird.

## Patentansprüche

1. Fahrzeug, insbesondere Personenkraftwagen, mit elektromotorisch angetriebenen Scheiben zum Öffnen und Schließen von Seitenfenstern und mit einem insbesondere elektromotorisch angetriebenen Schiebedach zum Freigeben und Verschießen einer Dachluke,
**gekennzeichnet durch**
eine Steuerung, die mit Überschreiten einer vorgegebenen Größe der vom Schiebedach (15) freigegebenen Lukenöffnung (14) ein Öffnen mindestens eines Seitenfensters (10), um zumindest einen Minimalbetrag auslöst.

2. Fahrzeug nach Anspruch 1,
**dadurch gekennzeichnet,**
daß die Steuerung so ausgebildet ist, daß sie beim Verkleinern der vom Schiebedach (15) freigegebenen Lukenöffnung (14) unter die vorgegebene Größe ein Schließen des mindestens einen Seitenfensters (10) auslöst.

3. Fahrzeug nach Anspruch 1 oder 2,
**dadurch gekennzeichnet,**
daß jedem Seitenfenster (10) ein elektromotorischer Fensterheber zum Heben und Senken der Seitenscheibe (11) und eine Steuereinheit (19) zugeordnet ist, die eingangsseitig an einem manuellen Wählschalter (17) zum Fensterbetätigen und ausgangsseitig an dem Elektromotor (12) des Fensterhebers angeschlossen ist und diesen je nach Stellung des Wählschalters (17) zur Drehung in die eine oder entgegengesetzte Drehrichtung einschaltet, und daß dem Schiebedach (15) eine Steuervorrichtung (20) zum Öffnen und Schließen der Dachluke (14) zugeordnet ist, die eingangsseitig an einem Positionsschalter (22), der von dem Schiebedach (15) bei Erreichen der vorgegebenen Größe der Dachlukenöffnung betätigt wird, und aussgangsseitig an einem weiteren Eingang mindestens einer Steuereinheit (19) angeschlossen ist.

4. Fahrzeug nach Anspruch 3,
**dadurch gekennzeichnet,**
daß die Steuervorrichtung (20) eingangsseitig an einem manuellen Wählschalter (18) zum Öffnen und Schließen der Dachluke (14) angeschlossen ist.

5. Fahrzeug nach einem der Ansprüche 1 - 4,
**dadurch gekennzeichnet,**
daß der Minimalbetrag des Öffnens mindestens einer Seitenscheibe so festgelegt ist, daß bei mäßiger bis hoher Fahrzeuggeschwindigkeit und voll oder weitgehend geöffneter Dachluke (14) keine sog. Wummergeräusche auftreten.
